# EUROPÄISCHE PATENTSCHRIFT

(11) **EP 2 184 440 B1**
(45) Veröffentlichungstag und Bekanntmachung des Hinweises auf die Patenterteilung: **18.07.2018**
(21) Anmeldenummer: 09174866.5
(22) Anmeldetag: 03.11.2009
(51) Int. Cl.: F01D 5/02, B29C 70/86, B29C 65/00

(54) **Triebwerkswelle einer Gasturbine**
Shaft of a gas turbine
Arbre d'une turbine à gaz

(30) Priorität: 05.11.2008 DE 102008056002
(43) Veröffentlichungstag der Anmeldung: 12.05.2010
(73) Patentinhaber: Rolls-Royce Deutschland Ltd & Co KG, 15827 Blankenfelde-Mahlow (DE)
(72) Erfinder: Schreiber, Karl, 15838, Am Mellensee (DE); Grothaus, Raimund, 01237 Dresden (DE)

(56) Entgegenhaltungen:
- EP-A1- 0 044 380
- EP-A2- 1 900 946
- GB-A- 1 356 393
- JP-A- S63 166 519
- US-A- 534 904

## Beschreibung

Die Erfindung betrifft eine Triebwerkswelle, insbesondere die Niederdruckturbinenwelle oder die Radialwelle für ein Gasturbinentriebwerk, bestehend aus einem Faserverbundkunststoffrohr mit metallischen Antriebs- und Abtriebszapfen, und bezieht sich insbesondere auf die Ausbildung der Verbindungsstelle zwischen dem Faserverbundmaterial und dem metallischen Abtriebs- bzw. Antriebszapfen.

Die konzentrisch in der hohl ausgebildeten Zwischendruckturbinenwelle oder bei einem Zweiwellengasturbinentriebwerk in der Hochdruckturbinenwelle angeordnete Niederdruckturbinenwelle, die zur Verbindung mit dem Fan und der Niederdruckturbine an den Enden jeweils ein Lasteinleitungsteil und ein Lastableitungsteil aufweist, hat gegenüber den beiden anderen Wellen den geringsten Durchmesser, die größte Länge und die geringste Drehzahl und muss zudem die höchste Belastung aufnehmen. Sie stellt innerhalb des Triebwerks ein hoch belastetes kritisches Bauteil dar, das keinesfalls versagen darf, aber andererseits einen möglichst geringen Außendurchmesser haben soll, um Rotorscheiben mit möglichst geringem Innendurchmesser verwenden zu können und somit leichte und leistungsfähige Triebwerke bereitstellen zu können.

Ähnliche Anforderungen wie an die Niederdruckwelle werden auch an die ein inneres und ein äußeres Getriebe verbindende Radialwelle des Gasturbinentriebwerks gestellt, die jedoch an beiden Wellenenden, aber immer in der gleichen Richtung, angetrieben wird, so dass unterschiedliche, hohe Drehmomente auf die Radialwelle wirken. Wie die Niederdruckwelle muss auch die Radialwelle möglichst schlank ausgebildet sein.

Um bei vermindertem Gewicht und ausgehend von dem begrenzten Außendurchmesser dennoch hohe Drehmomente übertragen zu können, wird schon eine Triebwerkswelle (Niederdruckturbinenwelle oder Radialwelle) vorgeschlagen, die als aus mehreren, bezüglich der Faserorientierung unterschiedlichen Faserlagen bestehendes Faserverbundkunststoffrohr mit an dessen Enden angeschlossenem Lasteinleitungsteil bzw. Lastableitungsteil ausgebildet ist. Ein wesentliches Merkmal der aus Faserverbundmaterial bestehenden hohlen Triebwerkswelle besteht in der speziellen Ausrichtung der Fasern, die im inneren Wandbereich in einem zur Übertragung von Torsionskräften geeigneten Winkel und im Außenwandbereich in einem die Steifigkeit des Faserverbundkunststoffrohres bewirkenden Winkel angeordnet sind, sowie in der Ausbildung mindestens des Lastableitungsteils und gegebenenfalls auch des Lasteinleitungsteils als metallischer, wegen der erforderlichen Härte notwendigerweise aus Stahl bestehender Abtriebszapfen bzw. Antriebszapfen. Schwierigkeiten bereitet dabei in dem vergleichsweise kleinen Verbindungsbereich die Herstellung einer festen Verbindung der metallischen Antriebs- und Abtriebszapfen mit dem Faserverbundmaterial der Niederdruck- bzw. der Radialwelle zur Übertragung der hohen Drehmomente zwischen dem metallischen Bauteil und dem Fasermaterial, die sich hinsichtlich ihrer physikalischen Eigenschaften, wie beispielsweise Elastizitätsmodul und thermischer Ausdehnungskoeffizient, deutlich voneinander unterscheiden.

Die GB 1 356 393 A beschreibt eine Welle aus einem Fasermaterial und mit einem Abtriebs- oder Antriebselement, das U-förmige Nuten ausbildet, in denen Fasern des Fasermaterials zur Verbindung des Abtriebs- oder Antriebselements mit der Welle geführt werden. An den Schnittpunkten zwischen den Nuten sind erhöhte Inseln ausgebildet.

Die EP 1 900 946 A2 beschreibt eine Welle aus einem Fasermaterial und mit einem Abtriebs- oder Antriebselement, das an seinem Außenumfang eine Mehrzahl von abstehenden Vorsprüngen ausbildet, die Kanäle bilden, in denen Fasern des Fasermaterials zur Verbindung des Abtriebs- oder Antriebselements mit der Welle geführt werden.

Der Erfindung liegt die Aufgabe zugrunde, die Verbindung zwischen dem Faserverbundkunststoffrohr und dem metallischen Antriebs- oder Abtriebszapfen so zu gestalten, das eine sichere Übertragung der hohen Kräfte zwischen den aus Metall bestehenden Antriebs- und Abtriebszapfen und der aus einem Faserverbundkunststoffrohr bestehenden Triebwerkswelle gewährleistet ist.

Erfindungsgemäß wird die Aufgabe mit einer gemäß den Merkmalen des Patentanspruchs 1 ausgebildeten Triebwerkswelle gelöst. Vorteilhafte Weiterbildungen der Erfindung ergeben sich aus den Unteransprüchen.

Der Kern der Erfindung besteht mit anderen Worten in einer speziellen Umwicklung des metallischen Abtriebs-/Antriebszapfens mit den Fasern des Faserverbundkunststoffrohres derart, dass die Fasern um eine Vielzahl von am Außenumfang eines mit dem Abtriebs- und/oder Antriebszapfen verbundenen Adapters ausgebildete Pylonen gelegt und an diesen geführt und fixiert sind. Durch das Wickeln der Fasern um die Pylone gelingt es, aus jeder der Fasern des Faserverbundkunststoffrohres (Triebwerkswelle) die hohen Lasten in den kleinen, im Durchmesser begrenzten Verbindungsbereich des metallischen Abtriebszapfens abzuleiten oder vom Antriebszapfen in das Fasermaterial einzuleiten und insbesondere die hohen Torsionskräfte aus dem Fasermaterial auf den Abtriebszapfen zu übertragen.

In weiterer Ausbildung der Erfindung ist der an den Abtriebs-/Antriebszapfen angeformte Adapter konisch verjüngt ausgebildet, so dass ein allmählich bezüglich der Materialstärke angepasster Übergang von einem dominierenden Fasermaterialbereich auf einen dominierenden metallischen Bereich erfolgt und hohe Schubspannungen aufgenommen werden können. Insbesondere aufgrund der Kombination der geschäfteten Ausbildung und der Pylone können trotz der kleinen Verbindungsstelle große Kräfte zwischen dem Fasermaterial und dem metallischen Material übertragen werden.

In vorteilhafter Weiterbildung der Erfindung sind an der Umfangsfläche des Adapters mehrere ringförmige Reihen von Pylonen in aufeinander folgenden Stufen angeordnet. Die Pylonen sind zu den Pylonen einer benachbarten Stufe versetzt, das heißt auf Lücke, angeordnet.

In weiterer Ausbildung der Erfindung weisen die Pylonen eine Umlenkkrümmung zur schonenden Umlenkung der Fasern und zwei in einem bestimmten Winkel verlaufende Seitenflächen, deren Ausrichtung an den jeweiligen Faserverlauf im Faserverbundkunststoffrohr angepasst ist, auf.

In weiterer Ausbildung der Erfindung sind die Pylonen etwa tropfenförmig mit spitzwinklig zueinander verlaufenden Seitenflächen ausgebildet, wobei der von den Seitenflächen eingeschlossene Winkel der jeweiligen positiven und negativen Faserausrichtung in dem betreffenden Wandbereich des Faserverbundkunststoffrohres entspricht. Gemäß einem noch anderen Merkmal der Erfindung sind die Pylonen etwa rechteckförmig mit parallel zueinander verlaufenden Seitenflächen ausgebildet und in der jeweiligen Stufe des Adapters entsprechend der jeweiligen positiven oder negativen Faserrichtung in dem Faserverbundkunststoffrohr ausgerichtet.

In Ausgestaltung der Erfindung sind an den Pylonen nur die Fasern von die zu übertragenden Torsionskräfte aufnehmenden Faserlagen des Faserverbundkunststoffrohres gehalten und geführt.

Gemäß einem weiteren Merkmal der Erfindung sind unmittelbar - beispielsweise in Adapterbohrungen durch Presspassung - mit dem Adapter verbundene erste Pylone mit geringer Länge und hoher Tragfähigkeit vorgesehen, um die die inneren Faserlagen gewickelt werden, sowie mit einem als Lochplatte ausgebildeten Fuß versehene und mittels Haltering am Adapter befestigte zweite Pylone größerer Länge vorgesehen, um die die nachfolgenden äußeren Faserlagen gewickelt werden und die für eine gute Führung sorgen. Die Lochplatte ist auf den inneren Faserstrang aufgesetzt und über die Löcher mit diesem verbunden. Die Lochscheibe kann den Bereich zwischen den ersten und den zweiten Pylonen abdecken.

Außerdem kann am Außenumfang des von dem Adapter und dem Fasermaterial gebildeten Verbindungsbereichs zwischen den Pylonen noch eine tangentiale, d. h. senkrecht zur Längsrichtung gewickelte 90°- Faserwicklung vorgesehen sein, um in diesem Bereich für eine hohe Kompression der Fasern zu sorgen und das Schädigungsverhalten der Triebwerkswelle zu verbessern.

Der Abtriebs- und der Antriebszapfen einschließlich Adapter bestehen aus Stahl mit bestimmter Härte. Vorzugsweise besteht der Adapter aus einer Titan-Legierung und ist mit dem aus Stahl bestimmter Härte bestehenden Abtriebs-/Antriebszapfen verschweißt.

Ein Ausführungsbeispiel der Erfindung wird anhand der Zeichnung näher erläutert. Es zeigen:
- Fig. 1: eine Draufsicht auf einen fragmentarisch dargestellten Abtriebs- oder Antriebszapfen mit an diesen anschließendem Wickelkern; und
- Fig. 2: eine Draufsicht auf eine weitere Ausführungsform des Abtriebs-/Antriebszapfens nach Fig. 1.

Der hier nur teilweise wiedergegebene Abtriebszapfen 1 besteht wegen der erforderlichen Härte aus Stahl und ist zur Herstellung der Verbindung mit den Kohlenstofffasern des Faserverbundkunststoffrohres mit einem sich - hier in mehreren Stufen 2 - zum Faserverbundkunststoffrohr hin verjüngenden Adapter 3 verbunden. An das verjüngte Ende des Adapters 3 schließt sich ein für das Wickeln der Kohlenstofffasern 4 erforderlicher Wickelkern 5 an, der später wieder entfernt wird. Am Außenumfang der einzelnen Stufen 2 sind in gleichmäßigem Abstand im Querschnitt tropfenförmige Pylone 6, das heißt, Haltenasen zum Fixieren und Umlenken der Kohlenstofffasern 4, angeformt. In den in den Stufen 2 aufeinander folgenden Reihen von Pylonen sind die Pylone 6 versetzt zueinander, das heißt auf Lücke, angeordnet. Die Pylone 6 sind zudem so ausgebildet, dass die Kohlenstofffasern 4 beim Wickeln an der Umlenkkrümmung 7 der Pylone in einem großen Radius und in einem bestimmten, dem ankommenden positiven Winkel entgegengesetzten negativen Winkel entlang der Seitenflächen 8 der Pylone umgelenkt und gehalten werden. Um die Pylone 6 der betreffenden Stufe 2 mit großem Durchmesser sind die zur Erzielung einer hohen Steifigkeit im Wesentlichen in Längsrichtung, das heißt in einem Winkel zwischen +/- 5° und +/-12° verlaufenden Kohlenstofffasern 4 des äußeren Wandbereichs der Niederdruckturbinenwelle gelegt, während die im anschließenden Wandbereich zur Aufnahme der Torsionskräfte stärker quer zur Längsachse - beispielsweise in einem Winkel von +/-35° bis +/-45° - verlaufenden Kohlenstofffasern um die Pylone 6 der Stufen 2 mit geringerem Durchmesser gewickelt sind. Der von den Seitenflächen 8 der tropfenförmigen Pylone 6 eingeschlossene Winkel stimmt mit dem positiven und negativen Faserverlaufswinkel in dem betreffenden Wandbereich des Faserverbundkunststoffrohres der Niederdruckturbinenwelle überein, das heißt, die Pylone 6 in einer Stufe 2 mit großem Durchmesser sind schlanker (kleinerer Winkel zwischen den Seitenflächen 8) als die Pylone 6 in einer Stufe 2 mit geringerem Durchmesser.

Der sich verjüngende Adapter 3 besteht aus einer Titanlegierung, hier TiAl6V4, die hinsichtlich ihrer thermischen Ausdehnung und Elastizität besser als Stahl an die physikalischen Eigenschaften der Kohlenstofffasern angepasst ist.

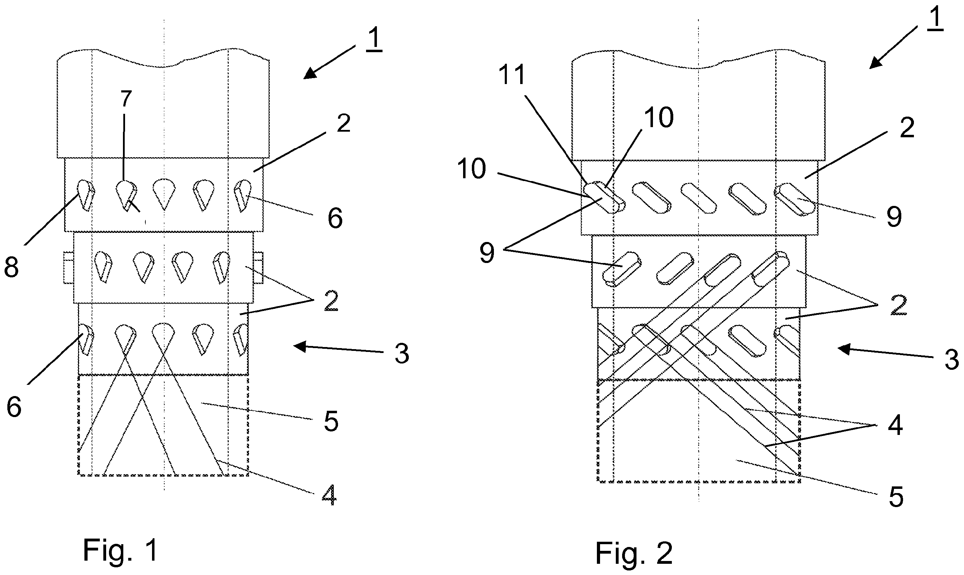

Wie Fig. 2 zeigt, können auch Pylone 9 mit parallel verlaufenden Seitenflächen 10 vorgesehen sein. In diesem Fall sind die Pylone 9 in der jeweiligen Stufe 2 in einem dem jeweiligen - positiven oder negativen - Faserverlauf in dem Faserverbundkunststoffrohr entsprechenden Winkel angeordnet und - abgesehen von einer Umlenkkrümmung 11 - im Wesentlichen rechtwinklig ausgebildet, so dass die Kohlenstofffasern nach der Umlenkung in der gleichen - entweder positiven oder negativen - Richtung wie vor der Umlenkung verlaufen.

Mit der zuvor beschriebenen Verbindungsausführung können von dem auf 100mm begrenzten Durchmesser der aus Faserverbundmaterial bestehenden Niederdruckturbinenwelle über eine vergleichsweise kleine Verbindungsstelle sehr hohe Lasten auf den mit dem Fan eines Gasturbinentriebwerks verbundenen metallischen Abtriebszapfen 1 - oder umgekehrt auch vom Antriebszapfen auf das Faserverbundmaterial - übertragen werden.

Abgesehen von dem wesentlichen Erfindungsgedanken, wonach eine direkte Kraftübertragung von den Fasern über die Pylone 6, 9 auf den Abtriebszapfen 1 (bzw. von einem nicht dargestellten Antriebszapfen über Pylone auf die Fasern) erfolgt, ist die Erfindung nicht auf die zuvor beschriebenen Ausführungsformen beschränkt. Ein wichtiges Merkmal ist die prinzipiell geschäftete Ausführung der Verbindung zwischen dem Abtriebs- bzw. Antriebszapfen und dem Faserverbundmaterial durch den sich verjüngenden Adapter 3, dessen Verjüngung auch stufenlos ausgeführt sein kann. Aufgrund des allmählichen Übergangs zwischen Fasermaterial und Adapter oder der sich entsprechend allmählich verringernden bzw. vergrößernden Materialstärke der beiden Verbindungspartner werden die Schubspannungen im Verbindungsbereich gering gehalten und gleichmäßig übertragen, wobei die Kräfte zwischen den beiden Verbindungskomponenten durch die jeweils stärkere, dominierende Komponente (sich verjüngender Teil des Abtriebszapfens oder des Faserverbundkunststoffrohres) bestimmt sind. Auf der Seite der Umlenkkrümmung 7, 11 können in die Oberfläche des stufenlos verjüngten Adapters 3 Vertiefungen eingeformt sein, um so dennoch eine Stufung zu schaffen und das Fasermaterial vollständig über die Pylone 6, 9 wickeln zu können. Darüber hinaus ist es auch denkbar, die nicht zur Übertragung von Torsionskräften vorgesehenen äußeren, im Wesentlichen in Längsrichtung der Niederdruckturbinenwelle verlaufenden Faserlagen nicht über Pylone zu wickeln. Schließlich kann auf das Fasermaterial im Bereich der Verbindungsstelle zusätzlich noch eine tangentiale Faserwicklung aufgebracht werden, um Druck aufzubauen und das Schädigungsverhalten in diesem Bereich zu verbessern.

### Bezugszeichenliste

- 1: Antriebszapfen
- 2: Stufen von 3
- 3: Adapter
- 4: Kohlenstofffasern
- 5: Wickelkern
- 6: Pylon (tropfenförmig)
- 7: Umlenkkrümmung von 6
- 8: Seitenflächen von 6
- 9: Pylon (rechteckförmig)
- 10: Seitenflächen von 9
- 11: Umlenkkrümmung von 9

## Patentansprüche

1. Triebwerkswelle, insbesondere Niederdruck- oder Radialwelle, bestehend aus einem Faserverbundkunststoffrohr mit metallischen Abtriebs- oder Antriebszapfen, und mit einem einstückig mit einem der Abtriebs- oder Antriebszapfen (1) verbundenen Adapter (3) mit auf dessen Umfangsfläche ausgebildeten Pylonen (6, 9),
**dadurch gekennzeichnet,**
**dass** an den Pylonen (6, 9) Fasern (4) des Fasermaterials zur Lastein- und -ableitung in das bzw. aus dem Faserverbundmaterial umgelenkt, geführt und gehalten sind, wobei an jedem einzelnen Pylon (6, 9) Fasern (4) umgelenkt, geführt und gehalten sind, und wobei eine direkte Kraftübertragung von den Fasern (4) über die Pylone (6, 9) auf den Abtriebs- oder Antriebszapfen (1) bzw. von dem Abtriebs- oder Antriebszapfen (1) über die Pylone (6, 9) auf die Fasern (4) erfolgt.

2. Triebwerkswelle nach Anspruch 1, **dadurch gekennzeichnet, dass** der Adapter (3) zur Herstellung einer geschäfteten Verbindung konisch verjüngt ausgebildet ist und die Verbindungsstelle allmählich von einem dominierenden Faserbereich in einen dominierenden metallischen Bereich übergeht.

3. Triebwerkswelle nach Anspruch 1 oder 2, **dadurch gekennzeichnet, dass** mehrere Reihen von Pylonen (6, 9) in mehreren Stufen (2) am Umfang des Adapters (3) ausgebildet sind.

4. Triebwerkswelle nach Anspruch 3, **dadurch gekennzeichnet, dass** die Pylone (6, 9) zu den Pylonen der jeweils benachbarten Stufe bzw. Reihe versetzt angeordnet sind.

5. Triebwerkswelle nach Anspruch 1, **dadurch gekennzeichnet, dass** die Pylone (6, 9) eine Umlenkkrümmung (7, 11) zur schonenden Umlenkung der Fasern (4) und zwei in einem bestimmten Winkel verlaufende Seitenflächen (8, 10), deren Ausrichtung an den jeweiligen Faserverlauf im Faserverbundkunststoffrohr angepasst ist, aufweisen.

6. Triebwerkswelle nach Anspruch 5, **dadurch gekennzeichnet, dass** die Pylone (6) etwa tropfenförmig mit spitzwinklig zueinander verlaufenden Seitenflächen (8) ausgebildet sind, wobei der von den Seitenflächen (8) eingeschlossene Winkel der jeweiligen Faserausrichtung in dem Faserverbundkunststoffrohr entspricht.

7. Triebwerkswelle nach Anspruch 5, **dadurch gekennzeichnet, dass** die Pylone (9) etwa rechteckförmig mit parallel zueinander verlaufenden Seitenflächen (10) ausgebildet sind und in der jeweiligen Stufe (2) des Adapters (3) entsprechend der jeweiligen Faserrichtung in dem Faserverbundkunststoffrohr ausgerichtet sind.

8. Triebwerkswelle nach Anspruch 5, **dadurch gekennzeichnet, dass** an den Pylonen (6, 9) nur die Fasern (4) von die Torsionskräfte aufnehmenden Faserlagen des Faserverbundkunststoffrohres gehalten und geführt sind.

9. Triebwerkswelle nach Anspruch 5, **gekennzeichnet durch** in dem Adapter (3) durch eine Presspassung befestige erste Pylone, um die die inneren, die Torsionskräfte aufnehmenden Faserlagen des Faserverbundkunststoffrohres gewickelt sind, und auf die inneren Faserlagen aufgesetzte und durch einen Haltering am Adapter abgestützte, über die Länge der ersten Pylone hinausragende zweite Pylone, um die die äußeren Faserlagen des Faserverbundkunststoffrohres gewickelt sind.

10. Triebwerkswelle nach Anspruch 1, **dadurch gekennzeichnet, dass** am Außenumfang des von dem Adapter (3) und dem Fasermaterial gebildeten Verbindungsbereichs zwischen den umlaufenden Reihen von Pylonen eine tangentiale, im Winkel von 90° zur Längsrichtung verlaufende Faserwicklung vorgesehen ist.

11. Triebwerkswelle nach Anspruch 1, **dadurch gekennzeichnet, dass** der Abtriebs- und der Antriebszapfen (1) einschließlich Adapter (3)aus Stahl mit bestimmter Härte besteht.

12. Triebwerkswelle nach Anspruch 1, **dadurch gekennzeichnet, dass** der Abtriebs-/Antriebszapfen aus Stahl bestimmter Härte und der mit diesem verschweißte Adapter (3)aus einer Titan-Legierung besteht.

13. Triebwerkswelle nach einem der vorangehenden Ansprüche, **dadurch gekennzeichnet, dass** das Faserverbundkunststoffrohr an seinen beiden Enden jeweils mit einem metallischen Abtriebs- oder Antriebszapfen verbunden ist und jeder dieser Zapfen mit einem Adapter gemäß Anspruch 1 versehen ist.

## Claims

1. Engine shaft, in particular the low-pressure or radial shaft, comprising a fiber-composite plastic tube provided with metallic driven or driving protrusions, and with an adapter (3) integrally connected to one of the driven or driving protrusions (1) with pylons (6, 9) being arranged on the circumferential area of the latter,
**characterized in that**
fibers (4) of the fiber material are deflected, guided and retained on the pylons (6, 9) for introducing load into and transmitting load from the fiber-composite material, wherein fibers (4) are deflected, guided and retained on each individual pylon (6, 9), and wherein a direct force transmission takes place from the fibers (4) via the pylons (6, 9) to the driven or driving protrusion (1) and/or from the driven or driving protrusion (1) via the pylons (6, 9) to the fibers (4).

2. Engine shaft in accordance with Claim 1, **characterized in that** the adapter (3) is designed conically tapered to provide a scarf joining and that the connecting zone gradually passes from a dominant fiber area into a dominant metallic area.

3. Engine shaft in accordance with Claim 1 or 2, **characterized in that** several rows of pylons (6, 9) are provided in several steps (2) on the circumference of the adapter (3).

4. Engine shaft in accordance with Claim 3, **characterized in that** the pylons (6, 9) are arranged offset to the pylons of the respective adjacent step or row.

5. Engine shaft in accordance with Claim 1, **characterized in that** the pylons (6, 9) have a deflecting curvature (7, 11) for gently deflecting the fibers (4) and two side faces (8, 10) extending at a specific angle whose orientation is adapted to the respective fiber direction in the fiber-composite plastic tube.

6. Engine shaft in accordance with Claim 5, **characterized in that** the pylons (6) are given an approximately drop-shaped design, with side faces (8) extending at an acute angle to each other, wherein the angle included by the side faces (8) corresponds to the respective fiber orientation in the fiber-composite plastic tube.

7. Engine shaft in accordance with Claim 5, **characterized in that** the pylons (9) are given an approximately rectangular design, with side faces (10) extending parallel to each other, and, in the respective step (2) of the adapter (3), being oriented in accordance with the respective fiber direction in the fiber-composite plastic tube.

8. Engine shaft in accordance with Claim 5, **characterized in that** only the fibers (4) of fiber layers of the fiber-composite plastic tube which take up the torsional forces are held and guided on the pylons (6, 9).

9. Engine shaft in accordance with Claim 5, **characterized by** first pylons attached in the adapter (3) by interference fit around which the inner fiber layers of the fiber-composite plastic tube are wound, which take up the torsional forces, and by second pylons around which the outer fiber layers of the fiber-composite plastic tube are wound, with the second pylons, which exceed the first pylons in length, being placed on the inner fiber layers and attached to the adapter by means of a retaining ring.

10. Engine shaft in accordance with Claim 1, **characterized in that** a tangential fiber winding, extending at an angle of 90° to the longitudinal direction, is provided on the outer circumference of the connecting zone formed by the adapter (3) and the fiber material between the circumferential rows of pylons.

11. Engine shaft in accordance with Claim 1, **characterized in that** the driven and the driving protrusions (1) including the adapter (3) are made of steel having a specific hardness.

12. Engine shaft in accordance with Claim 1, **characterized in that** the driven/driving protrusion is made of steel of a specific hardness and that the adapter (3) welded to the latter is made of a titanium alloy.

13. Engine shaft in accordance with one of the preceding Claims, **characterized in that** the fiber-composite plastic tube is connected at both ends to one each metallic driven or driving protrusion, and that each of these protrusions is provided with an adapter in accordance with Claim 1.

## Revendications

1. Arbre de moteur, notamment arbre basse pression ou arbre radial, composé d'un tube en plastique renforcé par des fibres avec tourillons menés ou menants métalliques et avec un adaptateur (3) avec des pylônes (6, 9) formés sur sa surface circonférentielle, intégralement relié à un des tourillons menés ou menants (1),
**caractérisé en ce que**
sur les pylônes (6, 9), des fibres (4) du matériau à fibres sont déviées, guidées et maintenues pour introduire et évacuer la charge dans, respectivement depuis le matériau composite renforcé par des fibres, sachant que sur chacun des pylônes (6, 9), des fibres (4) sont déviées, guidées et maintenues et sachant qu'a lieu une transmission directe de la force des fibres (4) au tourillon mené ou menant (1) par le biais des pylônes (6, 9), respectivement du tourillon mené ou menant (1) aux fibres (4) par le biais des pylônes (6, 9).

2. Arbre de moteur selon la revendication n°1, **caractérisé en ce que** l'adaptateur (3) est rétréci coniquement pour créer un joint biseauté et que la zone de liaison passe progressivement d'une zone principalement à fibres à une zone principalement métallique.

3. Arbre de moteur selon la revendication n° 1 ou n° 2, **caractérisé en ce que** plusieurs rangées de pylônes (6, 9) sont constituées en plusieurs étages (2) sur la circonférence de l'adaptateur (3).

4. Arbre de moteur selon la revendication n° 3, **caractérisé en ce que** les pylônes (6, 9) sont disposés décalés des pylônes de l'étage voisin ou de la rangée voisine.

5. Arbre de moteur selon la revendication n° 1, **caractérisé en ce que** les pylônes (6, 9) présentent une courbure de déviation (7, 11) pour dévier doucement les fibres (4) et deux surfaces latérales (8, 10) s'étendant dans un certain angle et dont l'orientation est adaptée au sens respectif des fibres dans le tube en plastique renforcé par des fibres.

6. Arbre de moteur selon la revendication n° 5, **caractérisé en ce que** les pylônes (6) sont conçus approximativement en forme de goutte avec des surfaces latérales (8) se rejoignant à angle aigu, sachant que l'angle compris entre les surfaces latérales (8) correspond à l'orientation respective des fibres dans le tube en plastique renforcé par des fibres.

7. Arbre de moteur selon la revendication n° 5, **caractérisé en ce que** les pylônes (6) sont conçus approximativement en forme rectangulaire avec des surfaces latérales (10) s'étendant parallèlement et sont orientés dans l'étage (2) respectif de l'adaptateur (3) selon la direction respective des fibres dans le tube en plastique renforcé par des fibres.

8. Arbre de moteur selon la revendication n° 5, **caractérisé en ce que** sur les pylônes (6, 9), seules les fibres (4) des couches de fibres absorbant les forces de torsion du tube en plastique renforcé par des fibres sont maintenues et guidées.

9. Arbre de moteur selon la revendication n° 5, **caractérisé par** des premiers pylônes fixés dans l'adaptateur (3) par un ajustage serré, autour desquels les couches de fibres intérieures absorbant les forces de torsion du tube en plastique renforcé par des fibres sont enroulées, et par des seconds pylônes saillant sur la longueur des premiers pylônes, posés sur les couches de fibres intérieures et appuyés sur l'adaptateur au moyen d'un anneau de retenue, autour desquels les couches de fibres extérieures du tube en plastique renforcé par des fibres sont enroulées.

10. Arbre de moteur selon la revendication n° 1, **caractérisé en ce que** sur la circonférence extérieure de la zone de liaison formée par l'adaptateur (3) et le matériau à fibres est prévue, entre les rangées circonférentielles de pylônes un enroulement de fibres tangentiel, s'étendant dans un angle de 90° par rapport au sens longitudinal.

11. Arbre de moteur selon la revendication n° 1, **caractérisé en ce que** le tourillon mené et le tourillon menant (1), y compris l'adaptateur (3), sont constitués d'acier d'une certaine dureté.

12. Arbre de moteur selon la revendication n° 1, **caractérisé en ce que** le tourillon mené/menant est constitué d'acier d'une certaine dureté et que l'adaptateur (3) soudé à celui-ci est constitué d'un alliage de titane.

13. Arbre de moteur selon une des revendications précédentes, **caractérisé en ce que** le tube en plastique renforcé par des fibres est relié à chacune de ses deux extrémités à un tourillon mené ou menant métallique et que chacun de ces tourillons est pourvu d'un adaptateur conformément à la revendication n° 1.
